# EUROPEAN PATENT APPLICATION

(11) **EP 1 580 935 A2**
(43) Date of publication of application: **28.09.2005**
(21) Application number: 05006211.6
(22) Date of filing: 22.03.2005
(51) Int. Cl.: H04L 12/28

(54) **Base station, communication apparatus, and communication system**

(30) Priority: 26.03.2004 JP 2004091442
(71) Applicant: MATSUSHITA ELECTRIC INDUSTRIAL CO., LTD., Kadoma-shi, Osaka 571-8501 (JP)
(72) Inventor: Matuoka, Makoto, Kasuya-Gun, Fukuoka-Ken, 811-2205 (JP); Kawaguchi, Yuichi, Kasuya-Gun, Fukuoka-Ken, 811-2413 (JP); Shimazu, Mikio, Kasuya-Gun, Fukuoka-Ken, 811-2311 (JP)
(74) Representative: Pautex Schneider, Nicole Véronique

(57) **Abstract**

The present invention provides a base station including a resource request-receiving unit (205) operable to receive a resource request from a communication apparatus, and a resource-reserving unit (206) operable to make a resource reservation in response to the resource request, in which the resource reservation is required by communication between the base station and the communication apparatus. The resource-reserving unit (206) reserves resources required by data packets, and resources required by acknowledgment packets paired with the data packets. The above structure of the base station transmits the acknowledgment packets without delay, and provides improved communication throughput.

## Description

The present invention relates to packet communication and, more particularly, to resource reservation in the packet communication.

Recent broadbandization creates an in-home network extending from a broadband router in each general household. The home network allows several terminals to rush in to provide simultaneous access to the Internet.

In the meanwhile, adding to e-mails and Web services, video- or audio-based AV application services such as video distribution and IP phones are on the increase as network-related services.

The AV application services must be provided in real time, and are considerably influenced by packet discard or delay. For example, it is sometimes difficult to use the AV application services, depending upon network situations. Accordingly, it is preferred that packets in the real-time oriented AV application services are treated in preference to e-mail packets that are in no need of real-time communication.

To support the real-time oriented services, the task group "e" (TGe) from the IEEE802.11 committee is now studying to provide extended functions of IEEE802.11MAC-layers called an IEEE802.11e. The IEEE802.11e provides channel access systems called an EDCA (Enhanced Distributed Channel Access) and an HCCA (HCF Controlled Channel Access). According to cited reference No. 1, there is disclosed priority control and band control in wireless LAN circumstances based on the IEEE802.11a- or IEEE802.11g-standard. For cited reference No. 1, refer to "Wireless LAN Standard IEEE802.11e to realize QoS" by Tatani et al., Journal of The Institute of Image Information and Television Engineers, Vol. 57, No. 11, pp. 1459-1464 (2003).

In the video distribution service, either a TCP or UDP is used as an upper IP layer. In the TCP-based video distribution service, data packets such as AV data are transferred from a server to clients, and acknowledgment (ACK) packets responsive to the data packets are transferred, as a response to the data packets, from the clients to the server.

According to cited patent reference No. 1 (published Japanese Patent Application Laid-Open No. 2001-127830), there is disclosed a process of treating the acknowledgment packets. The cited patent reference No. 1 discloses priority setting for treating the acknowledgement packets.

However, the connection type communication such as the TCP has a problem that the occurrence of delay in transmission of the acknowledgement packets results in reduced communication throughput. A particular problem is that the throughput is reduced by delayed transfer of the acknowledgement packets although the data packets are transferred without delay.

In contrast with the acknowledgement packets responsive to AV data that must be communicated in real time, acknowledgement packets responsive to the e-mail packets in no need of real-time communication need not be treated on a high-priority basis. However, according to the cited patent reference No. 1, the acknowledgement packets are treated without regard to the difference in priority as discussed above, and another problem therewith is that data communication in need of high real-time processing is reduced in throughput, depending upon situations.

The reduction in throughput brings about a further problem of, e.g., disturbances in images and interruptions in audio in the video/audio-related packet communication.

In view of the above, an object of the present invention is to provide a base station, a communication apparatus, and a communication system, whereby acknowledgement packets are transmittable without delay, with a consequential improvement in throughput that otherwise would be reduced because of the delayed transmission of the acknowledgment packets.

A first aspect of the present invention provides a base station including a resource request-receiving unit operable to receive a resource request from a communication apparatus, and a resource-reserving unit operable to make a resource reservation in response to the resource request, in which the resource reservation is required by communication between the base station and the communication apparatus. In the base station, the resource-reserving unit reserves a resource required by a data packet and a resource required by an acknowledgment packet that is paired with the data packet.

The above structure transmits the acknowledgment packets without delay after the data packets are received by the communication apparatus. This feature provides improved communication throughput.

A second aspect of the present invention provides a base station in which the resource-reserving unit reserves a band required by the data packet and a band required by the acknowledgment packet.

The above structure avoids making communication between the base station and the communication apparatus until a reservation is made for the band required by the data packets and that required by the acknowledgment packets responsive to the data packets. As a result, the acknowledgment packets are transmittable without delay, with a consequential improvement in communication throughput.

A third aspect of the present invention provides a base station in which the resource-reserving unit notifies the communication apparatus of a result from the resource reservation.

The above structure avoids making communication between the communication apparatus and the base station until the communication apparatus ascertains a result from the reservation made by the base station.

A fourth aspect of the present invention provides a communication apparatus comprising a resource-requesting unit operable to address a resource request to a base station. The resource request is a request to be made for a resource. In the communication apparatus, the resource request addressed by the resource-requesting unit includes a resource request required to communicate a data packet, and a resource request required to communicate an acknowledgement packet paired with the data packet. The resource request required to communicate the data packet is separate from the resource request required to communicate the acknowledgement packet.

The above structure allows the base station to positively assure resources required by the acknowledgement packets as well as those required by the data packets. As a result, the acknowledgement packets are transmittable without delay, with a consequential improvement in communication throughput.

A fifth aspect of the present invention provides a communication apparatus in which the resource-requesting unit addresses the resource request required to communicate the acknowledgment packet, when receiving a notification from the base station as to assured resource reservation in response to the resource request required to communicate the data packet.

The above structure allows the communication apparatus to positively reserve the resources required by the acknowledgment packets as well as those required by the data packets.

A sixth aspect of the present invention provides a communication system including a first communication apparatus, a second communication apparatus operable to feed an acknowledgment packet into the first communication apparatus upon receipt of a data packet from the first communication apparatus, in which the acknowledgment packet is paired with the data packet, and a base station operable to administer a resource for communication between the first communication apparatus and the second communication apparatus. In the communication system, the first communication apparatus comprise a resource-requesting unit operable to address a resource request to the base station, in which the resource request is required to communicate the data packet. The second communication apparatus comprise a resource-requesting unit operable to address a resource request to the base station, in which the resource request is required to communicate the acknowledgement packet. The base station comprises a resource request-receiving unit operable to receive the resource request from the first communication apparatus and the resource request from the second communication apparatus, and a resource-reserving unit operable to reserve a resource required by the data packet and a resource required by the acknowledgment packet.

The above structure reserves the resources required by the data packets and those required by the acknowledgement packets, even when the data packets and acknowledgement packets are communicated between the communication apparatuses. As a result, the acknowledgement packets are transmittable without delay, and improved communication throughput is achievable.

A seventh aspect of the present invention provides a communication system in which the first communication apparatus comprises an output instruction unit operable to issue an instruction signal to the second communication apparatus to urge the second communication apparatus to address, to the base station, the resource request required to communicate the acknowledgement packet.

The above structure ensures that the resources for the acknowledgement packets are reserved, even when the data packets and acknowledgement packets are outputted from the different communication apparatuses.

An eighth aspect of the present invention provides a communication system in which the first communication apparatus is connected to a third communication apparatus to transfer the data packet from the third communication apparatus to the second communication apparatus through the first communication apparatus. In the communication system, the first communication apparatus comprises a determining unit operable to determine whether a resource request must be addressed to the base station for the data packet transferred from the third communication apparatus, before the first communication apparatus transfers the data packet to the second communication apparatus. In response to a result from determination from the determining unit, the first communication apparatus addresses, to the base station, the source request required to communicate the data packet, and the second communication apparatus addresses, to the base station, the resource request required to communicate the acknowledgement packet.

In the communication apparatuses between which the data packets and acknowledgement packets are communicated through the relaying communication apparatus, the above structure avoids addressing the resource requests to the base station until it is ascertained that the resource reservation must be made. As a result, efficient resource requests are made, and the acknowledgment packets are transmittable without delay, with a consequential improvement in communication throughput.

A ninth aspect of the present invention provides a communication apparatus comprising a receiving unit operable to receive a data packet, a determining unit operable to determine priority for the data packet received by the receiving unit, a storing unit operable to store an acknowledgement packet in accordance with the priority determined by the determining unit, in which the acknowledgment packet is paired with the data packet, and an output unit operable to output the acknowledgment packet in accordance with the priority from the communication apparatus through the storing unit.

The above structure allows a plurality of acknowledgment packets to be outputted in order of priority from the communication apparatus. As a result, higher real-time communication is put ahead of lower real-time communication.

A tenth aspect of the present invention provides a communication apparatus in which the determining unit determines the data packet as having high priority when the data packet is at least one of an image packet and an audio packet.

The above structure permits higher real-time data such as images and audio to be treated on a higher-priority basis.

An eleventh aspect of the present invention provides a communication apparatus comprising a first classification rule-storing unit operable to store a data packet-classifying rule for classifying a data packet, a second classification rule-storing unit operable to store an acknowledgement packet-classifying rule for classifying an acknowledgment packet, in which the acknowledgment packet is paired with the data packet, and a generating unit operable to generate the acknowledgement packet-classifying rule based on the data packet-classifying rule.

The above structure generates the proper rule for classifying the acknowledgment packets.

A twelfth aspect of the present invention provides a communication apparatus in which each of the data packet-classifying rule and the acknowledgement packet-classifying rule comprises at least one of a source address of the data packet, a destination address of the data packet, a communication protocol of the data packet, and priority of the data packet.

The above structure prepares the proper classification rule.

A thirteenth aspect of the present invention provides a communication apparatus in which the generating unit applies the priority in the data packet-classifying rule to the acknowledgement packet-classifying rule.

The above structure allows for succession to the priority from the data packets to the acknowledgment packets paired with the data packets. As a result, the acknowledgement packets are transmittable without delay, and improved communication throughput is achievable.

A fourteenth aspect of the present invention provides a communication apparatus comprising a receiving unit operable to receive a data packet, a priority-detecting unit operable to detect priority from the data packet, and a priority-assigning unit operable to assign the priority detected by the priority-detecting unit to an acknowledgement packet that is paired with the data packet.

The above structure allows for easy succession to the priority directly from the data packets to the acknowledgement packets. As a result, the acknowledgement packets paired with the data packets can be outputted at the same priority as that in the data packets.

A fifteenth aspect of the present invention provides a communication apparatus in which the priority detected by the priority-detecting unit is at least one of 802.1p-priority possessed by a MAC header, a ToS-field possessed by an IPv4 packet, a DSCP-field possessed by the IPv4 packet, a traffic class field possessed by an IPv6 packet, and a flow label field possessed by the IPv6 packet.

The above structure allows proper priority to be detected from the data packet and then assigned to the acknowledgement packets.

The above, and other objects, features and advantages of the present invention will become apparent from the following description read in conjunction with the accompanying drawings, in which like reference numerals designate the same elements.
Fig. 1 is a block diagram illustrating a communication system according to a first embodiment of the present invention;
Fig. 2 is a block diagram illustrating a base station according to the first embodiment;
Fig. 3 is a block diagram illustrating the interior of a communication apparatus according to the first embodiment;
Fig. 4 is a descriptive illustration showing a flow of processing steps between the bases station and the communication apparatus according to the first embodiment;
Fig. 5 is an illustration showing a menu screen according to the first embodiment;
Fig. 6 is an illustration showing the content of a menu according to the first embodiment;
Fig. 7 is a descriptive illustration showing a flow of processing steps between a base station and a communication apparatus according to a second embodiment;
Fig. 8 is a block diagram illustrating a communication system according to a third embodiment;
Fig. 9 is a block diagram illustrating a base station according to the third embodiment;
Fig. 10 is a block diagram illustrating a first communication apparatus according to the third embodiment;
Fig. 11 is a block diagram illustrating a second communication apparatus according to the third embodiment;
Fig. 12 is an illustration showing a flow of processing steps according to the third embodiment;
Fig. 13 is a block diagram illustrating a communication system according to a fourth embodiment;
Fig. 14 is a block diagram illustrating a first communication apparatus according to the fourth embodiment;
Fig. 15 is a descriptive illustration showing a flow of communication steps according to the fourth embodiment;
Fig. 16 is a block diagram illustrating a communication apparatus according to a fifth embodiment;
Fig. 17 is a block diagram illustrating a communication apparatus according to a sixth embodiment;
Fig. 18 is a block diagram illustrating a communication apparatus according to a seventh embodiment;
Fig. 19 is an illustration showing a data packet-classifying rule according to seventh embodiment; and
Fig. 20 is an illustration showing an acknowledgment packet-classifying rule according to the seventh embodiment.

Preferred embodiments of the present invention are now described with reference to the accompanying drawings.

It is to be noted that both cable communication and wireless communication may be herein made between a base station and a communication apparatus, or among communication apparatuses.

The base station may be communicated via a cable or otherwise by radio.

The base station may be a resource-controlling apparatus including a router.

The communication apparatus includes every kind of data packet-transferring apparatus such as a wireless terminal and a line terminal, and may be, e.g., a computer terminal, a portable terminal, and the router.

### (First embodiment)

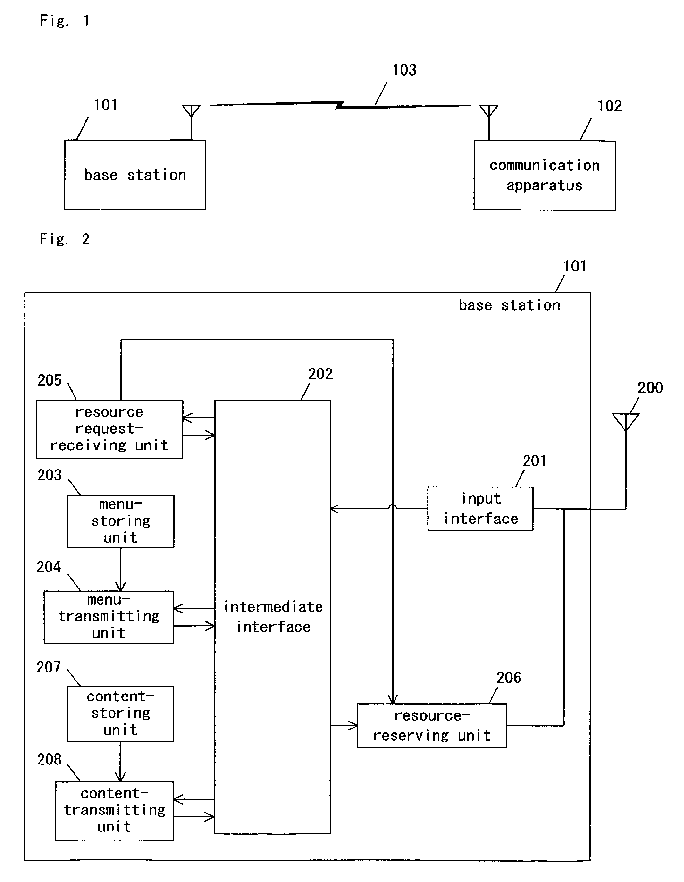

A first embodiment is now described with reference to Fig. 1 through Fig. 6.

The present embodiment is directed to making a substantially concurrent reservation, in the base station, for resources required by data packets and those required by acknowledgement packets in response to the data packets.

There are provided between the base station and the communication apparatus connection type communication such as a TCP, non-connection type communication such as a UDP, or otherwise communication combined therewith.

The base station is a primary apparatus, such as a server, operable to transmit the data packets. The communication apparatus is a primary apparatus operable to receive the data packets from the base station.

Referring to Fig. 1, a communication system according to the present embodiment is illustrated in block diagram form. The base station 101 is connected to the communication apparatus 102 through a transmission channel 103. As illustrated in Fig. 1, the transmission channel 103 is wireless, but may be hard-wired as an alternative. The base station 101 and communication apparatus 102 may be connected together through, e.g., wireless LAN, or otherwise may be hard-wired together through a coaxial cable. The base station 101 and communication apparatus 102, connected together through the wireless LAN, are each provided with IEEE802.1e-functions.

The base station stores content data in the form of the data packets, and is operable to transmit the data packets to the communication apparatus 102. The content data may include video content and music content.

The base station 101 transmits one of the data packets to the communication apparatus 102 through the transmission channel 103. The communication apparatus 102 is operable to decode the received data packet. The communication apparatus 102 is operable to transmit an acknowledgement packet to the base station 101 upon receipt of the data packet. The base station 101 transmits the next data packet to the communication apparatus 102 in response to the acknowledgement packet from the communication apparatus 102.

The established connection of the packet communication as discussed above allows the data packets and acknowledgement packets to be communicated between the base station 101 and the communication apparatus 102.

The inner structure of the base station 101 is now described with reference to Fig. 2.

Referring to Fig. 2, the interior of the base station 101 according to the present embodiment is illustrated in block diagram form.

The base station 101 comprises elements as discussed below.

An antenna 200 is operable to transmit and receive radio wave signals in wireless communication. The cable communication, off course, eliminates the antenna 200. An input interface 201 is operable to receive an IEEE802.11MAC-frame from the signals received by the antenna 200. An intermediate interface 202 includes a TCP/IP protocol stack, and is bridged to the functions of upper application layers.

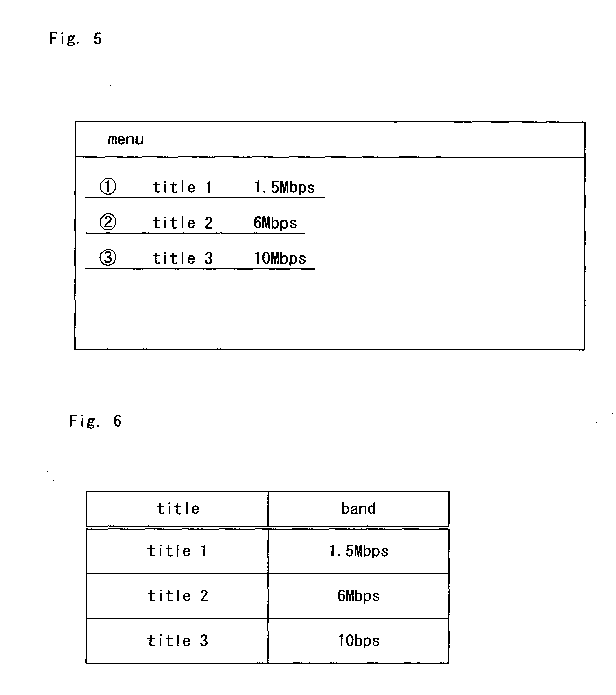

A menu-storing unit 203 is operable to store information related to content that is stored in a content-storing unit 207. For example, as illustrated in Fig. 6, several pieces of the stored content are listed in the form of titles and required bands.

A menu-transmitting unit 204 is operable to feed the menu information from the menu-storing unit 203 to the communication apparatus 102 through the intermediate interface 202 in response to a menu display request from the communication apparatus 102. The menu-transmitting unit 204 may prepare an easy-to-use screen for users of the communication apparatus 102.

The prepared menu screen is as illustrated in, e.g., Fig. 5. As seen from Fig. 5, titles of content and required bands thereof are illustrated.

The content-storing unit 207 is operable to store the content to be transmitted to the communication apparatus 102. The content may include data such as images and audio. The content-storing unit 207 may store several pieces of content. The data packets to be transferred to the communication apparatus 102 are stored in the content-storing unit 207.

A content-transmitting unit 208 is operable to obtain the stored content data from the content-storing unit 207, and to feed the obtained content data into the communication apparatus 102 through the intermediate interface 202. The content data are transmitted in the form of the data packets to the communication apparatus 102 from the base station 101.

A resource request-receiving unit 205 is operable to receive a resource request from the communication apparatus 102, and to calculate resources required by the data packets and those required by the acknowledgement packets, in accordance with the received resource request. The resources are herein communication-related parameters such as communication rates.

A resource-reserving unit 206 is operable to reserve resources required in the transmission channel 103 in accordance with the calculated resources from the resource request-receiving unit 205. The reservation is made for the resources required by the acknowledgement packets to be transmitted from the communication apparatus 102 to the base station 101 as well as those required by the data packets to be transmitted from the base station 101 to the communication apparatus 102. More specifically, bands required by the data packets in the transmission channel 103 and those required by the acknowledgement packets in the transmission channel 103 are reserved by the resource-reserving unit 206.

The resource-reserving unit 206 sets up output transmission rates in accordance with the bands required by the data packets, in order to transmit the data packets without delay.

Alternatively, the resource-reserving unit 206 schedules the time in which the data are allowed to be transmitted through the transmission channel 103 from the communication apparatus 102 operable to output the acknowledgment packets, and from another communication apparatus connected to the transmission channel 103. The scheduled time allows the acknowledgement packets to be transmitted without interruptions to the base station 101 from the communication apparatus 102, and consequently possible delay in transmission of the acknowledgement packets is avoidable.

The above-mentioned pre-reservation for the resources required by the acknowledgement packets transmits the acknowledgement packets without delay, with a consequential improvement in communication throughput.

The resource-reserving unit 206 may be provided with output interface functions when necessary. The output interface function-equipped, resource-reserving unit 206 has control of outputting the data packets from the base station 101.

After assuring the resource reservation, the resource-reserving unit 206 notifies the communication apparatus 102 of a result from the reservation. The communication apparatus 102 requests a data communication from the base station 101 in response to the notification from the base station 101.

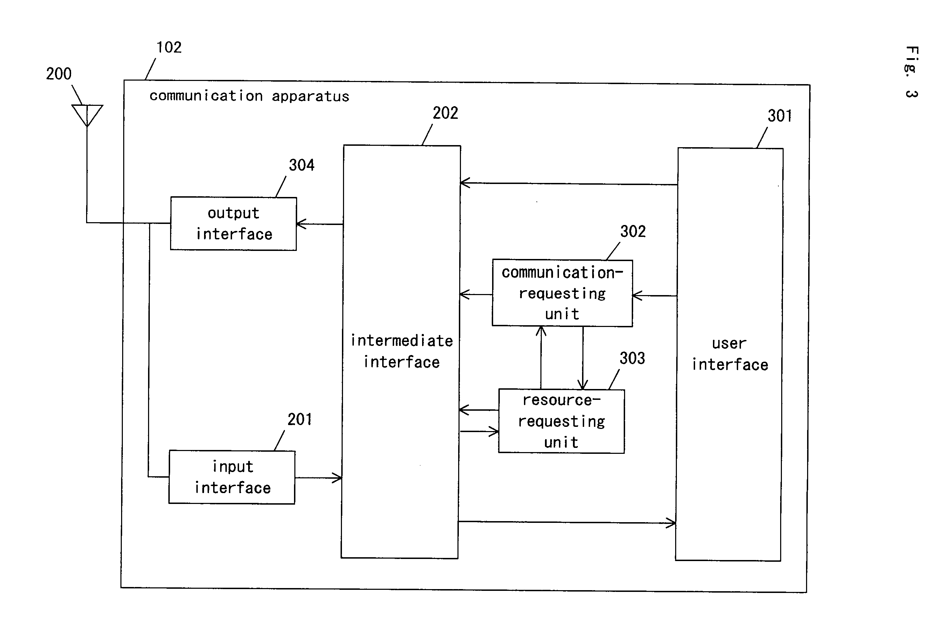

The communication apparatus 102 is now described with reference to Fig. 3.

Referring to Fig. 3, the interior of the communication apparatus 102 according to the present embodiment is illustrated in block diagram form.

The communication apparatus 102 comprises elements as discussed below.

A user interface 301 is operable to receive a variety of requests from users, and to have control of displaying the received various information to the users. For example, the user interface 301 has control of displaying a menu screen and a content screen.

A communication-requesting unit 302 is operable to request the base station 101 to transmit, to the communication apparatus 102, data packets related to content such as, e.g., video specified by the users.

A resource-requesting unit 303 is operable to request a resource reservation from the base station 101 before the communication-requesting unit 302 requests the base station 101 to transmit the data packets to the communication apparatus 102. The request from the resource-requesting unit 303 for the resource reservation is received by the base station 101 at the resource request-receiving unit 205.

The communication-requesting unit 302 never requests the base station 101 to actually transmit the content-related data packets to the communication apparatus 102 until the base station 101 notifies the communication apparatus 102 that the resource reservation has been made in accordance with the resource request from the resource-requesting unit 303.

An output interface 304 is operable to feed the resource request out of the resource-requesting unit 303 in IEEE802.11MAC-frame format, and further to feed the communication request out of the communication-requesting unit 302 in IEEE802.11MAC-frame format. The resource and communication requests according to the IEEE802.11MAC0-frame format are receivable by the base station 101.

Similarly to the intermediate interface 202 in the base station 101, an intermediate interface 202 includes a TCP/IP protocol stack, and is bridged to the functions of upper application layers. Similarly to the input interface 201 in the base station 101, an input interface 201 is operable to receive an IEEE802.11-MAC frame from signals received by an antenna 200.

Although the wireless transmission channel 103 needs the antenna 200, the cable transmission channel 103 eliminates the antenna 200.

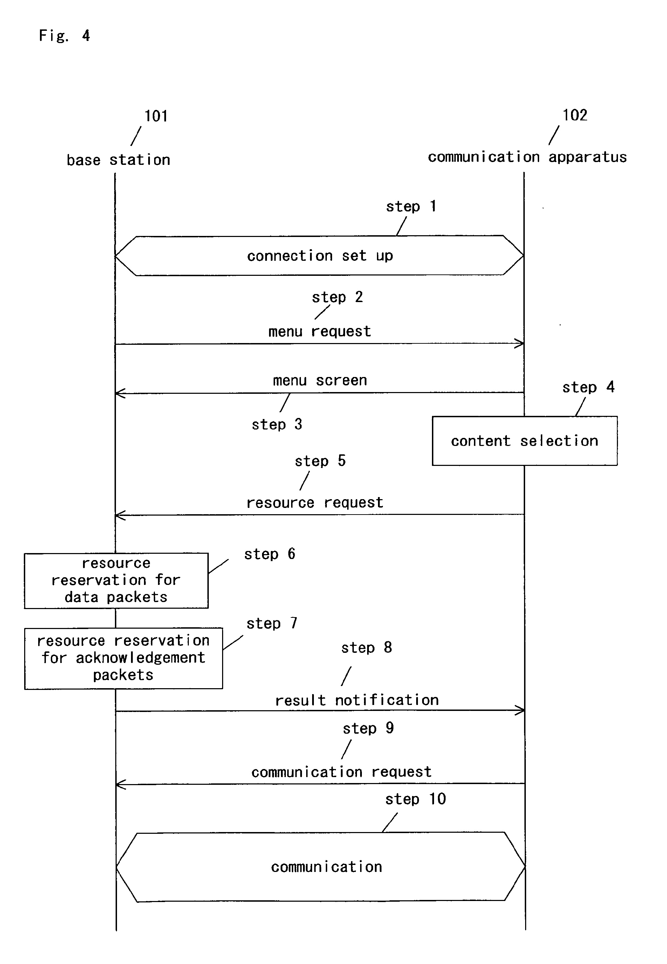

A process of communication between the base station 101 and the communication apparatus 102 is now described with reference to Fig. 4. Referring to Fig. 4, a flow of processing steps between the base station 101 and the communication apparatus 102 according to the present embodiment is illustrated.

At step 1, connection between the base station 101 and the communication apparatus 102 is established. The established connection allows for communication between the base station 101 and the communication apparatus 102.

At step 2, the communication apparatus 102 addresses a menu display request to the base station 101. At step 3, the base station 101 transmits a menu screen to the communication apparatus 102 in response to the menu display request therefrom. For example, a menu screen as illustrated in Fig. 5 is displayed on the communication apparatus 102 in receipt of the menu screen from the base station 101.

At step 4, content is selected from the menu screen. For example, the content "title 2" and "6Mbps"is selected from the menu screen of Fig. 5. The result from the selection is placed into the communication-requesting unit 302. The communication-requesting unit 302 notifies the resource-requesting unit 303 of the content in the communication-requesting unit 302. As a result, at step 5, the communication apparatus 102 addresses a resource request to the base station 101. At this time, 6Mbps is a band required by the selected content, and the resource request is addressed to assure the band 6Mbps.

Upon receipt of the resource request from the communication apparatus 102, the base station 101 reserves, at step 6, resources required by data packets, and at step 7, reserves resources required by acknowledgement packets. Thus, the base station 101 makes a substantially concurrent reservation for the resources required by the acknowledgement packets as well as those required by the data packets in response to the resource request from the communication apparatus 102. For example, when the acknowledgement packets are one tenth of the data packets in size, then the 0.6Mbps resources are reserved at step 7. More specifically, a total of 6.6Mbps resources for the data packets and acknowledgement packets are reserved.

At step 8, the base station 101 notifies the communication apparatus 102 of a result from the reservation after completing the resource reservation. At step 9, the communication apparatus 102 addresses a communication request to the base station 101 upon receipt of the result from the resource reservation. At step 10, the base station 101 feeds the data packets into the communication apparatus 102 upon receipt of the communication request from the communication apparatus 102. The communication apparatus 102 sends out the acknowledgement packets to the base station 101 by return. Pursuant to the present embodiment, the selected content is dispatched from the base station 101 to the communication apparatus 102, and when the dispatched content is video, then the dispatched content is regenerated and displayed on the communication apparatus 102.

Assuming that the resource reservation in step 6 or step 7 fails to be made, the message saying that "invisible at present" may be displayed on the communication apparatus 102, or alternatively the message saying that "disturbances in video are likely to occur" may be displayed thereon to provide assured services to users.

As described above, pursuant to the present embodiment, the base station 101 reserves the resources for the data packets and those for the acknowledgement packets in response to the resource request from the communication apparatus 102 before actual communication is made between the base station 101 and the communication apparatus 102. This feature transmits the acknowledgement packets without delay, and provides improved throughput.

### (Second embodiment)

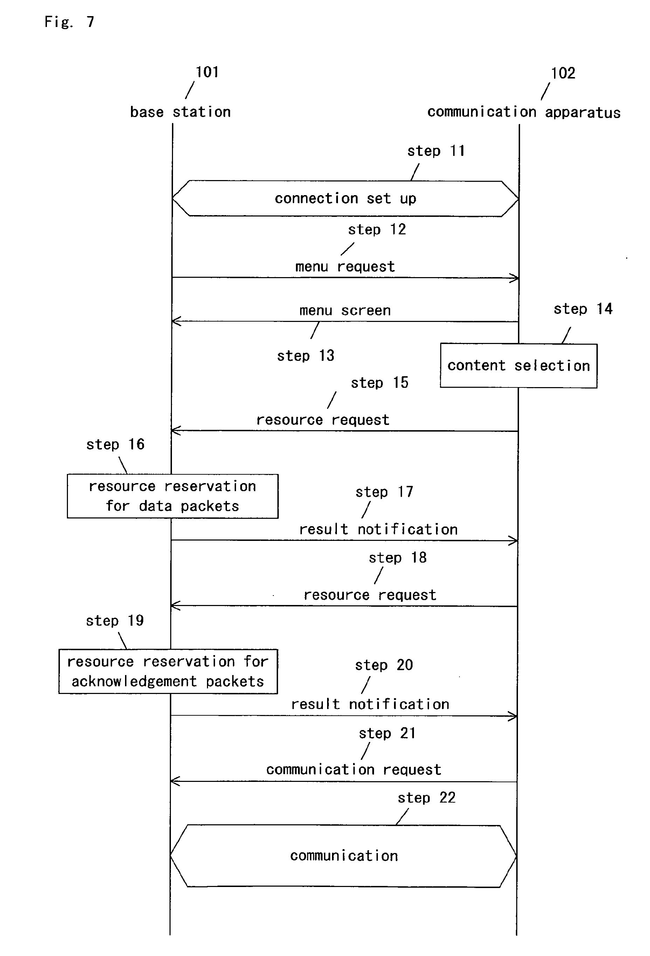

A second embodiment is now described with reference to Fig. 7. The present embodiment is directed to a process in which resources required by data packets and those required by acknowledgement packets are reserved in turn by a base station 101. Similarly, the present embodiment is directed to a process in which a resource request required by the data packets and that required by the acknowledgement packets are addressed in turn to the base station 101 by a communication apparatus 102.

A communication system operable to provide a process of treatment as illustrated in Fig. 7 is constructed as illustrated in Fig. 1, and content are distributed from the base station 101 to the communication apparatus 102.

Referring to Fig. 7, a flow of processing steps between the base station 101 and communication apparatus 102 according to the present embodiment is illustrated.

A flow of communication between the base station 101 and the communication apparatus 102 is now described.

At step 11, communication connection between the base station 101 and the communication apparatus 102 is established. The established connection allows for communication between the base station 101 and the communication apparatus 102.

At step 12, the communication apparatus 102 addresses a menu request to the base station 101. At step 13, the base station 101 transmits a menu screen to the communication apparatus 102 in response to the menu request therefrom. For example, a menu screen of Fig. 5 is displayed on the communication apparatus 102 in receipt of the menu screen from the base station 101.

At step 14, content is selected from the menu screen. For example, the content "title 2" and "6Mbps" is selected from the menu screen of Fig. 5. The result from the selection is placed into a communication-requesting unit 302. The communication-requesting unit 302 notifies a resource-requesting unit 303 of the content therein. As a result, at step 15, the communication apparatus 102 addresses a resource request to the base station 101. At this time, 6Mbps is a band required by the selected content, and the resource request is addressed to assure the band 6Mbps.

At step 16, the base station 101 makes a resource reservation for data packets upon receipt of the resource request from the communication apparatus 102. Pursuant to the present embodiment, the selected content is of 6Mbps, and the 6Mbps band is reserved. For example, a resource-reserving unit 206 sets up an output rate required to transmit the data packets from the base station 101 to the communication apparatus 102.

When completing the resource reservation for the data packets, then at step 17, the base station 101 notifies the communication apparatus 102 of a result from the reservation.

At step 18, the communication apparatus 102 addresses a resource request required by acknowledgement packets to the base station 101 upon receipt of the notification from the base station 101. At step 19, the base station 101 makes a resource reservation for the acknowledgement packets in accordance with the resource request from the communication apparatus 102. Assuming that a band required by the acknowledgement packets is, e.g., one tenth of the band required by the data packets, the 0.6Mbps band is reserved according to the present embodiment. At step 20, the base station 101 notifies the communication apparatus 102 of a result from the reservation after completing the resource reservation.

As described above, the resources required by the data packets and those required by the acknowledgement packets are reserved in turn by the base station 101 according to the present embodiment. Similarly, the resource request for the data packets and that for the acknowledgement packets are outputted in order by the communication apparatus 102. Preferably, the communication apparatus 102 may address the resource request for the acknowledgement packets to the base station 101, either after receipt of a result from the resource reservation for the data packets, or alternatively without awaiting the receipt of the aforesaid result.

Pursuant to the present embodiment, the resource request as well as the resource reservation is executed in turn, and an assured resource reservation is made.

At step 21, the communication apparatus 102 addresses a communication request to the base station 101 upon receipt of the result from the reservation therefrom.

At step 22, the base station 101 sends out the data packets to the communication apparatus 102 in response to the communication request therefrom, and the communication apparatus 102 feeds the acknowledgement packets into the base station 101 by return.

The data packets from the base station 101 are decoded and displayed on the communication apparatus 102.

Pursuant to the present embodiment, to start communication between the base station 101 and the communication apparatus 102, the above-described steps reserve the resources for the data packets to be transmitted from the base station 101 to the communication apparatus 102 and the resources for the acknowledgement packets to be transmitted from the communication apparatus 102 to the base station 101, before actual communication is made between the base station 101 and the communication apparatus 102. This feature transmits the acknowledgement packets without delay, and provides improved communication throughput.

Assuming that the resource reservation in step 16 or step 19 fails to be made, the message saying that "invisible at present" may be displayed on the communication apparatus 102, or alternatively another message saying that "disturbances in video are likely to occur" may be displayed thereon to provide assured services to users.

### (Third embodiment)

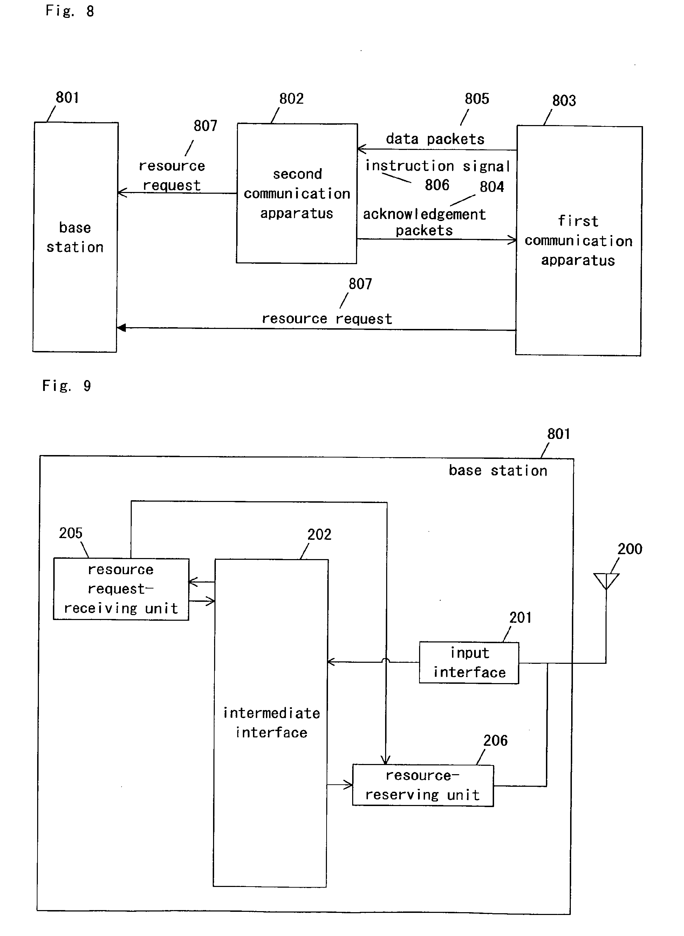

A third embodiment is now described with reference to Fig. 8 through Fig. 12.

The present embodiment is directed to a communication system in which connection type communication is made among a base station, a first communication apparatus, and a second communication apparatus through a transmission channel.

The communication system according to the present embodiment is outlined with reference to Fig. 8.

Referring to Fig. 8, the communication system according to the present embodiment is illustrated in block diagram form.

As illustrated in Fig. 8, the communication system according to the present embodiment communicates data packets 805 from the first communication apparatus 803 to the second communication apparatus 802, and feed acknowledgement packets 804 from the second communication apparatus 802 into the first communication apparatus 803 by return.

Each of the first and second communication apparatus 803, 802 comprises a resource-requesting unit 303 operable to address a resource request to the base station 801. To feed the data packets 805 into the second communication apparatus 802, the first communication apparatus 803 addresses a resource request required by the data packets 805 to the base station 801 that administers resources. Similarly, to feed the acknowledgement packets 804 into the first communication apparatus 803, the second communication apparatus 802 addresses a resource request required by the acknowledgement packets 804 to the base station 801.

Since the acknowledgement packets 804 are outputted only from the second communication apparatus 802, the first communication apparatus 803 sends out an instruction signal 806 to the second communication apparatus 802, whereby the second communication apparatus 802 addresses the resource request required by the acknowledgement packets 804 to the base station 801. Accordingly, the second communication apparatus 802 addresses the resource request 807 required by the acknowledgement packets 804 to the base station 801 in response to the instruction signal 806. More specifically, the second communication apparatus 802 addresses the resource request 807 to the base station 801 for the acknowledgement packets 804 on behalf of the first communication apparatus 803.

The base station 801 comprises a resource request-receiving unit 205 operable to receive the resource requests 807 from the first and second communication apparatus 803, 802, and a resource-reserving unit 206 operable to make a resource reservation in response to each of the resource requests 807. The base station 801 is operable to reserve, in response to each of the resource requests 807, resources required by the data packets 805 and those required by the acknowledgement packets 804. The data packets 805 never start being transferred from the first communication apparatus 803 from the second communication apparatus 802 until the pre-reservation for the resources as previously discussed is completed. This feature transmits the acknowledgement packets 804 without delay, with a consequential improvement in communication throughput.

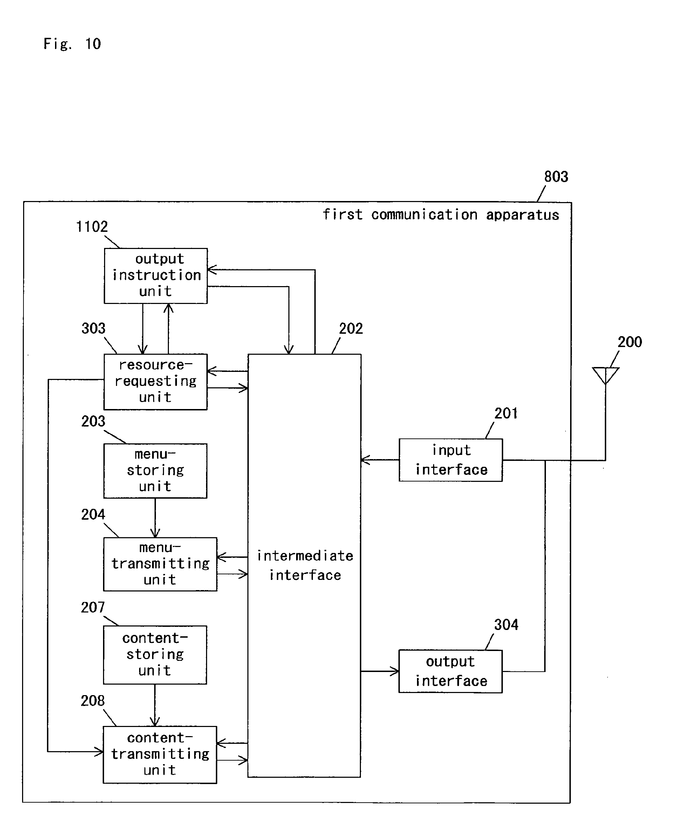

The base station 801 is now described with reference to Fig. 9. Referring to Fig. 9, the base station according to the present embodiment is illustrated in block diagram form.

There are elements identified by the same reference numerals as those of Fig. 2, and descriptions thereon are herein omitted.

Different from Fig. 2, the base station 801 excludes a menu-storing unit 203 and other elements, but may alternatively include them, depending upon the specification of the communication system. Pursuant to the present embodiment, the content-related data packets 805 are fed out of the first communication apparatus 803, and the base station 801 may optionally comprise the menu-storing unit 203, a content-storing unit 207, etc.

The resource-receiving unit 205 is operable to receive the resource requests 807 from the first and second communication apparatus 803, 802.

The resource-reserving unit 206 is operable to reserve resources in the transmission channel in response to each of the received resource requests 807.

For example, the resource-reserving unit 206 sets up an output transmission rate in accordance with a band required by the data packets 805, thereby transmitting the data packets 805 without delay.

Alternatively, the resource-reserving unit 206 scheduled the time in which data are allowed to be transmitted through the transmission channel 103 from the second communication apparatus 802 operable to output the acknowledgment packets 804, and from another communication apparatus connected to the transmission channel 103. The scheduled time transmits the acknowledgement packets 804 from the second communication apparatus 802 without interruptions, and thus without delay.

The first communication apparatus 803 is now described with reference to Fig. 10.

Referring to Fig. 10, the first communication apparatus 803 according to the present embodiment is illustrated in block diagram form.

There are elements identified by the same reference numerals as those of Fig. 3, and descriptions thereon are herein omitted.

The resource-requesting unit 303 is operable to address the resource request 807 required by the data packet 805 to the base station 801. An output instruction unit 1102 is operable to feed the instruction signal 806 into the second communication apparatus 802, whereby the second communication apparatus 802 is urged to address the resource request 807 required by the acknowledgement packets 804 to the base station 801.

The first communication apparatus 803 comprises a content-storing unit 207 and a content-transmitting unit 208 because the content-related data packets 805 are fed from the first communication apparatus 803 into the second communication apparatus 802. The first communication apparatus 803 further comprises a menu-storing unit 203 and a menu-transmitting unit 204 because a content-related menu screen is transmitted from the first communication apparatus 803 to the second communication apparatus 802 in response to a menu request from the second communication apparatus 802.

The data packets 805 are outputted from the first communication apparatus 803 through an output interface 304 via an intermediate interface 202.

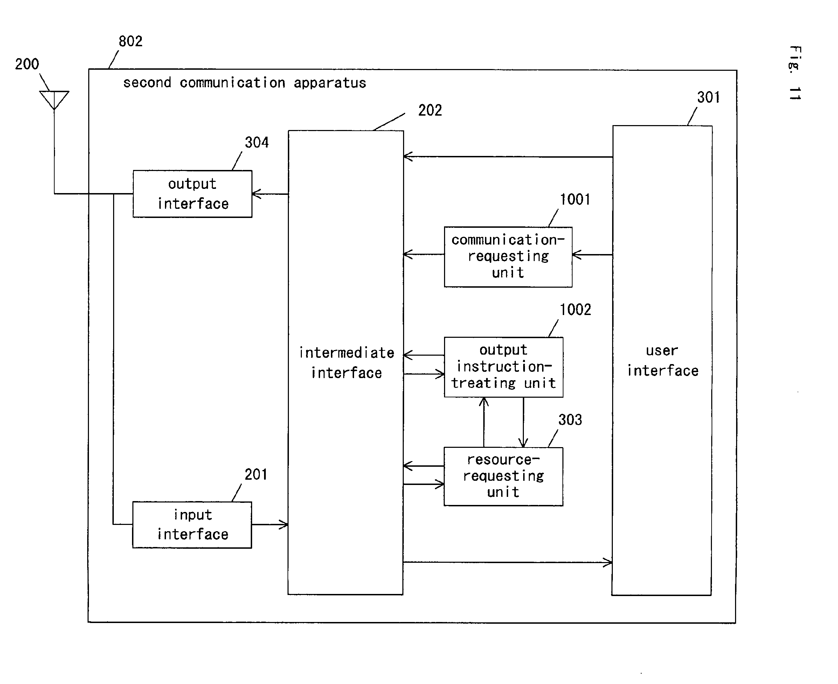

The second communication apparatus 802 is now described with reference to Fig. 11. Referring to Fig. 11, the second communication apparatus 802 according to the present embodiment is illustrated in block diagram form.

A communication-requesting unit 1001 is operable to request the first communication apparatus 803 to transmit the data packets 805 therefrom to the second communication apparatus 802. An output instruction-treating unit 1002 is operable to execute processing steps to address the resource request 807 to the base station 801 in response to the instruction signal 806 from the first communication apparatus 803. Results from the processing steps at the output instruction-treating unit 1002 are transferred into the resource-requesting unit 303, from which the resource request 807 is addressed to the base station 801. Upon receipt of the resource request 807, the base station 801 reserves the resources required by the acknowledgement packets 804.

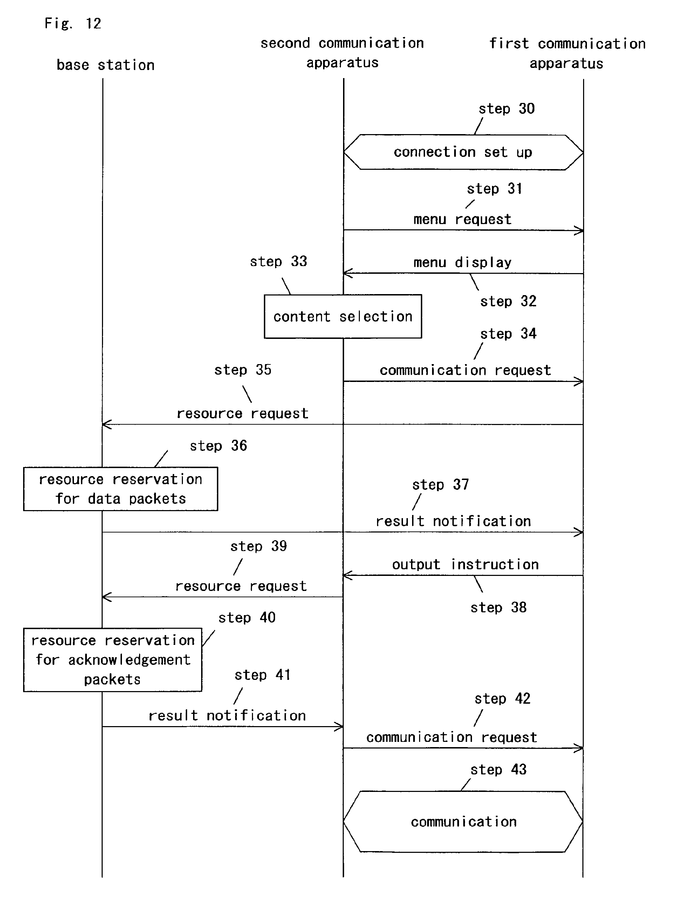

A flow of processing steps is now described with reference to Fig. 12. Referring to Fig. 12, a chain of steps according to the present embodiment is illustrated.

At step 30, connection between the first and second communication apparatus 803, 802 are established. At step 31, the second communication apparatus 802 requests a menu display from the first communication apparatus 803. At step 32, the first communication apparatus 803 feeds a menu screen into the second communication apparatus 802. The menu screen is as illustrated in Fig. 5.

At step 33, the second communication apparatus 802 selects content in accordance with the menu screen. At step 34, after selecting the content, the second communication apparatus 802 addresses a communication request to the first communication apparatus 803. At step 35, the first communication apparatus 803 addresses the resource request 807 for the data packets 805 to the base station 801.

At step 36, the base station 801 makes a resource reservation for the data packets 805.

At step 37, the base station 801 notifies the first communication apparatus 803 of a result from the reservation for the data packet resources. At step 38, upon receipt of the notification from the base station 801, the first communication apparatus 803 issues output instructions 806 to the second communication apparatus 802. At step 39, upon receipt of the output instructions 806 from the first communication apparatus 803, the second communication apparatus 802 addresses the resource request 807 required by the acknowledgement packet 804 to the base station 801.

At step 40, the base station 801 reserves the acknowledgement packet resources. At step 41, the base station 801 notifies the second communication apparatus 802 of a result from the reservation. At step 42, the second communication apparatus 802 transfers the reservation result to the first communication apparatus 803 in order to notify the first communication apparatus 803 of the reservation result. As a result, the resources required by the data packets 805 and those required by the acknowledgement packets 804 are reserved.

At step 43, the data packets 805 and acknowledgement packets 804 are communicated between the first and second communication apparatus 803, 802 as a result of the completion of the resource reservation.

The above-described communication system transmits the acknowledgement packet 804 without delay, and provides improved throughput.

### (Fourth embodiment)

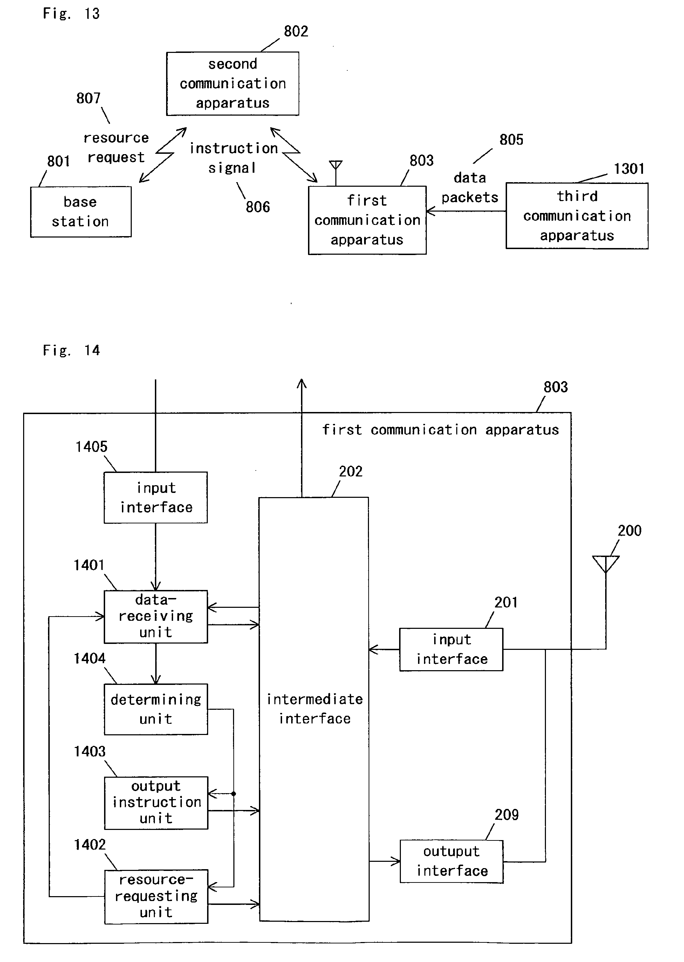

A fourth embodiment is now described with reference to Fig. 13 through Fig. 15.

Referring to Fig. 13, a communication system according to the present embodiment is illustrated in block diagram form.

The present embodiment is directed to the communication system in which a first communication apparatus 803 is connected to a third communication apparatus 1301 to allow a second communication apparatus 802 to receive data packets from the third communication apparatus 1301 through the first communication apparatus 803.

The third communication apparatus 1301 is connected to the first communication apparatus 803 to transmit the data packets 805 therefrom to the first communication apparatus 803.

The first communication apparatus 803 addresses a resource request to the base station 801 when determining that resources required by the received data packets 805 from the third communication apparatus 1301 must be reserved. The first communication apparatus 803 issues output instructions 806 to the second communication apparatus 802. The second communication apparatus 802 addresses a resource request 807 required by acknowledgement packets to the base station 801 in response to the output instructions 806.

The base station 801 reserves resources required by the data packets 805 and those required by the acknowledgement packets in response to each of the resource requests from the first and second communication apparatus 803, 802.

At this time, the first communication apparatus 803 determines whether the resource reservation must be made, because communication between the second communication apparatus 802 and the third communication apparatus 1301 is made through the first communication apparatus 803.

Referring to Fig. 14, the first communication apparatus 803 according to the present embodiment is illustrated in block diagram form.

An input interface 1405 is operable to receive data from the third communication apparatus 1301. Another input interface 201 and an output interface 209 are operable to communicate data between the first communication apparatus 803 and the second communication apparatus 802.

A determining unit 1404 is operable to determine based on the data packets 805 received by a data-receiving unit 1401 whether a resource reservation must be made for the received data packets 805. Assuming that the received data packets 805 are, e.g., video or audio, each of which must be communicated in real time, the determining unit 1404 determines that the resource reservation must be made.

A resource-requesting unit 1402 is operable to address the resource request required by the data packets 805 to the base station 801 in accordance with the determination from the determining unit 1404. An output instruction unit 1403 is operable to send out an instruction signal to the second communication apparatus 802 to urge the second communication apparatus 802 to address the resource request 807 to the base station 801. The second communication apparatus 802 addresses the resource request 807 required by the acknowledgement packets to the base station 801 in response to the instruction signal from the output instruction unit 1403.

Thus, a determination is made as to whether the resource reservation must be made for the data packets from the third communication apparatus 1301, before an actual resource request therefor is made. This feature allows for efficient resource request and efficient resource reservation. In addition, the determination is made in the first communication apparatus 803 that acts as a communication relay, and consequently optimum processing steps are realized.

The determining unit 1404 may alternatively store rules related to resource reservation necessity in advance, thereby making the determination based on a comparison between the rules and data received from the third communication apparatus 1301.

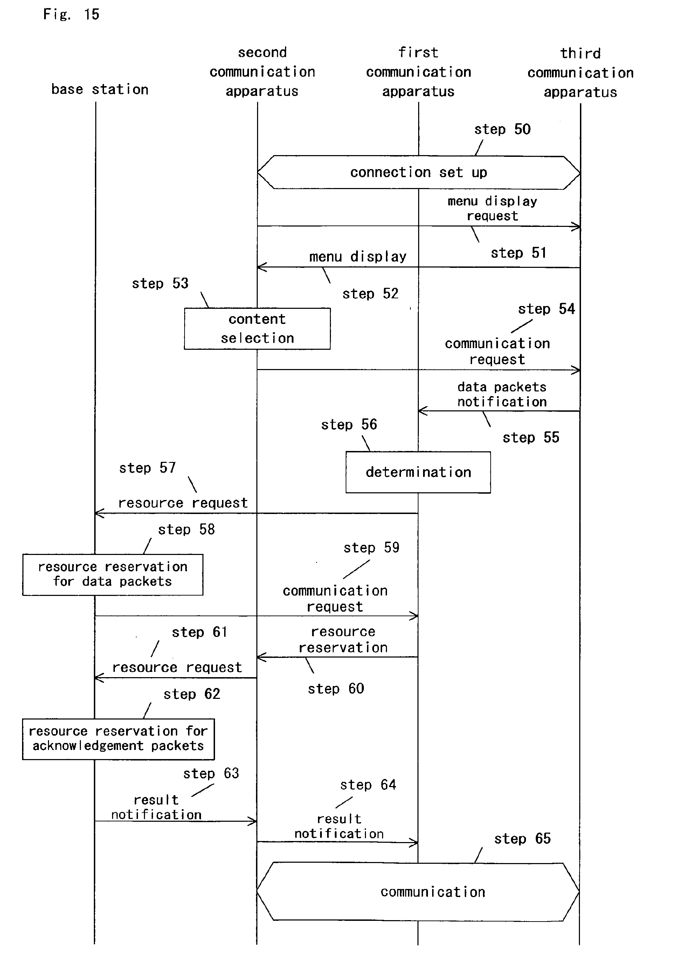

A process of treatment is now described with reference to Fig. 15.

Referring to Fig. 15, a flow of communication steps according to the present embodiment is illustrated.

At step 50, connection between the second communication apparatus 802 and the third communication apparatus 1301 is established. At step 51, the second communication apparatus 802 requests menu display from the third communication apparatus 1301. At step 52, the third communication apparatus 1301 conveys a menu to the second communication apparatus 802. A menu screen as illustrated in Fig. 5 is displayed on the second communication apparatus 802.

At step 53, the second communication apparatus 802 selects content in accordance with the menu screen. At step 54, the second communication apparatus 802 addresses a communication request to the third communication apparatus 1301. At step 55, the third communication apparatus 1301 outputs the data packets 805 into the first communication apparatus 803 in response to the communication request from the second communication apparatus 802. At step 56, the first communication apparatus 803 determines whether a resource reservation must be made for the received data packets 845.

When the determination in step 56 results in "YES", then at step 57 the first communication apparatus 803 addresses the resource request to the base station 801. At step 58, the base station 801 reserves resources required by the data packets 805, upon receipt of the resource request from the first communication apparatus 803. At step 59, the base station 801 notifies the first communication apparatus 803 of a result from the reservation.

At step 60, the first communication apparatus 803 issues the output instructions 806 to the second communication apparatus 802 in response to the result from the resource reservation required by the data packets 805. The output instructions 806 from the first communication apparatus 803 intend to persuade the second communication apparatus 802 to address the resource request 807 for acknowledgement packets to the base station 801 on behalf of the first communication apparatus 803. At step 61, the second communication apparatus 802 addresses the resource request 807 to the base station 801 in response to the output instructions 806.

At step 62, the base station 801 makes a resource reservation required by the acknowledgement packets, upon receipt of the resource request 807 from the second communication apparatus 802. At step 63, the base station 801 notifies the second communication apparatus 802 of a result from the reservation. At step 64, the second communication apparatus 802 transfers the notification from the base station 801 to the first communication apparatus 803.

The above-described steps reserve the resources required by the data packets 805 and those required by the acknowledgement packets. At the final step 65, the data packets 805 and acknowledgement packets are communicated between the second communication apparatus 802 and the third communication apparatus 1301.

As described above, pursuant to the present embodiment, even when the data packet communication is made through a further communication apparatus placed somewhere along the communication channel, the further communication apparatus may be instructed to make a resource request on surrogacy, whereby the resources for the data packets and those for the acknowledgement packets are reserved. This feature transmits the acknowledgement packets without delay, and provide improved communication throughput.

### (Fifth embodiment)

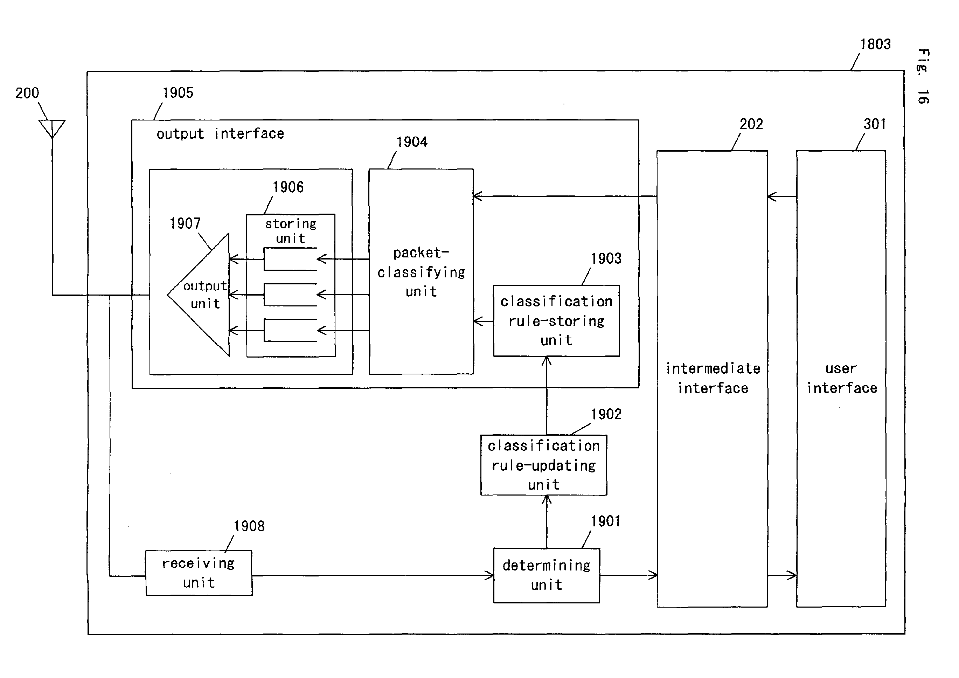

A fifth embodiment is now described with reference to Fig. 16.

The present embodiment is directed to a communication apparatus operable to determine the importance of each received data packet to assign priority based on the determined importance to an acknowledgement packet responsive to each of the data packets.

Referring to Fig. 16, the communication apparatus according to the present embodiment is illustrated in block diagram form.

A receiving unit 1908 is operable to receive data packets from a base station. A determining unit 1901 is operable to determine priority for each of the received data packets. For example, image packets and audio packets are more important in real time, and are determined as higher-priority packets by the determining unit 1901, meanwhile TCP-related data packets other than images are less important in real time, and are determined as lower-priority packets by the determining unit 1901.

The determined priority is conveyed to a classification rule-updating unit 1902. The classification rule-updating unit 1902 is operable to update priority information stored in a classification rule-storing unit 1903. As a result, the priority information in the classification rule-storing unit 1903 is updated according to the received data packets.

The acknowledgement packets responsive to the data packets received by the receiving unit 1908 are classified in the classification rule-storing unit 1903 with reference to classified priority contained therein, before being stored in a storing unit 1906.

For example, acknowledgement packets responsive to the data packets determined as having higher priority are determined as having higher priority as well, and are stored accordingly in the storing unit 1906. Pursuant to the present embodiment, the storing unit 1906 includes queues based on, e.g., priority, and the acknowledgement packets may be stored in the different queues in order of priority.

The acknowledgement packets in the storing unit 1906 are outputted in order of priority out of the communication apparatus from the storing unit 1906 through an output unit 1907. Some of the acknowledgement packets, which have the same priority, are emitted in chronological order in which they are stored in the storing unit 1906.

As an alternative, in the classification rule-updating unit 1902, each of the acknowledgement packets paired with the data packets may be provided with the priority determined by the determining unit 1901. Pursuant to the present embodiment, each of the acknowledgement packets paired with the data packets either has addresses equivalent to those of corresponding one of the data packets or uses the same ports as those of corresponding one of the data packets.

In a communication apparatus including several output units 1907, the acknowledgement packets may be outputted therefrom with reference to the priorities contained in the common classification rule-storing unit 1903, whereby they are fed out of the communication apparatus in order of priority. Alternatively, a separate classification rule-storing unit 1903 may be provided for each of the different output units 1907, whereby the acknowledgement packets are outputted on a priority basis.

As described above, pursuant to the present embodiment, the priority determined according to types of the received data packets can be reflected in the acknowledgement packets, and consequently the acknowledgement packets are outputted on a priority basis from the communication apparatus.

### (Sixth embodiment)

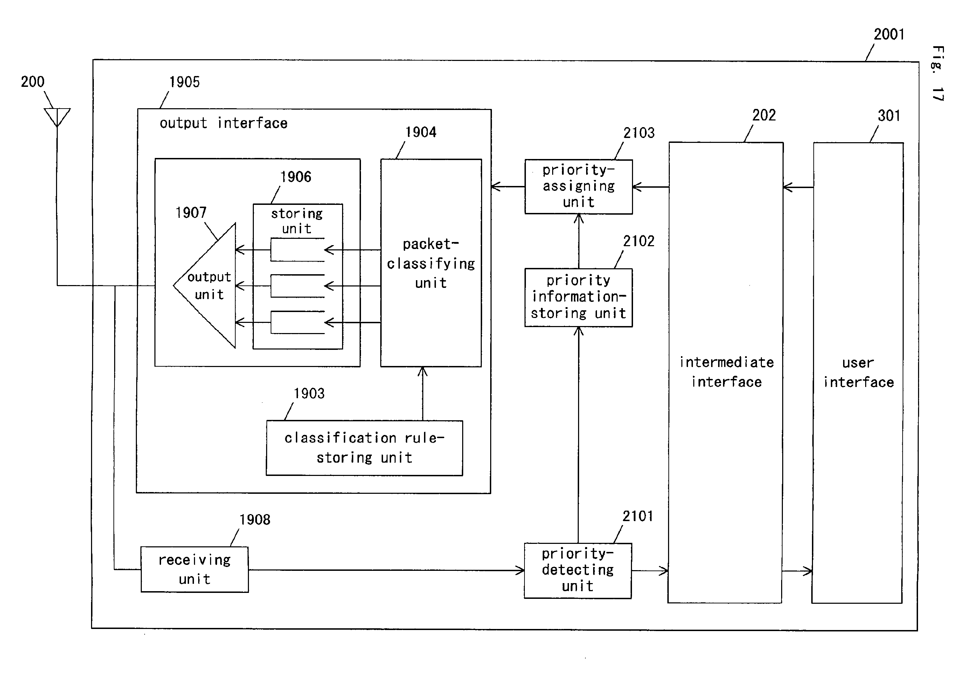

A sixth embodiment is now described with reference to Fig. 17.

Referring to Fig. 17, a communication apparatus according to the present embodiment is illustrated in block diagram form. The communication apparatus according to the present embodiment is operable to detect priority information from packets received through data communication with another communication apparatus, thereby assigning, to transmitted packets, priority information based on the detected priority information.

A receiving unit 1908 is operable to receive packets from another communication apparatus in data communication with the present communication apparatus. The received packets contain priority-related information, and a priority-detecting unit 2101 is operable to detect priority from each of the received packets. For example, image- or audio-related packets are set as having higher priority. The priority-detecting unit 2101 detects the priority from the priority-related information included in the packets to feed the detected priority into a priority information-storing unit 2102. The priority information-storing unit 2102 is operable to store the detected priority.

A priority-assigning unit 2103 is operable to assign the priority from the priority information-storing unit 2102 to the transmitted packets. More specifically, the transmitted packets contain lower priority when the detected priority in the received packets is lower, but contain higher priority when the detected priority in the received packets is higher.

For example, assume that each of the received packets has the priority of an EF-class (DSCP value 0x101110) according to the Diffserv system, and that each of the received packets contains a source address having the value "A1" and a destination address having the value "A2". In this instance, the priority information-storing unit 2102 stores a rule that the EF-class priority is possessed by each packet containing a source address of the value "A2" and a destination address of the value "A1 ". According to the rule, the EF-class priority is assigned to each transmitted packet that contains a source address having the value "A2" and a destination address having the value "A1".

Alternatively, the priority may be determined based on transmit ports and receive ports other than the source address and destination address.

The transmitted packets containing the priority from the priority-assigning unit 2103 are classified in order of priority in a packet-classifying unit 1904, and are thereby stored in storing unit 1906 on a priority basis. The storing unit 1906 includes, e.g., several queues, whereby higher-priority transmitted packets are stored in a higher-priority queue, but lower-priority transmitted packets are stored in a lower-priority queue.

An output unit 1907 is operable to output the transmitted packets in order of priority out of the communication apparatus from the storing unit 1906.

As described above, pursuant to the present embodiment, the priority in each of the received packets is assigned directly to corresponding one of the transmitted packets, and data are transmittable and receivable based on the same priority in data communication between the same communication apparatuses. This feature provides data communication without delay.

The detected priority may be any one of elements as given below, or alternatively may be several of them to be simultaneously used: a 802.1 p-priority possessed by a MAC header; a ToS-field possessed by an IPv4 packet; a DSCP-field possessed by the IPv4 packet; a traffic class field possessed by an IPv6 packet; and a flow label field possessed by the IPv6 packet.

### (Seventh embodiment)

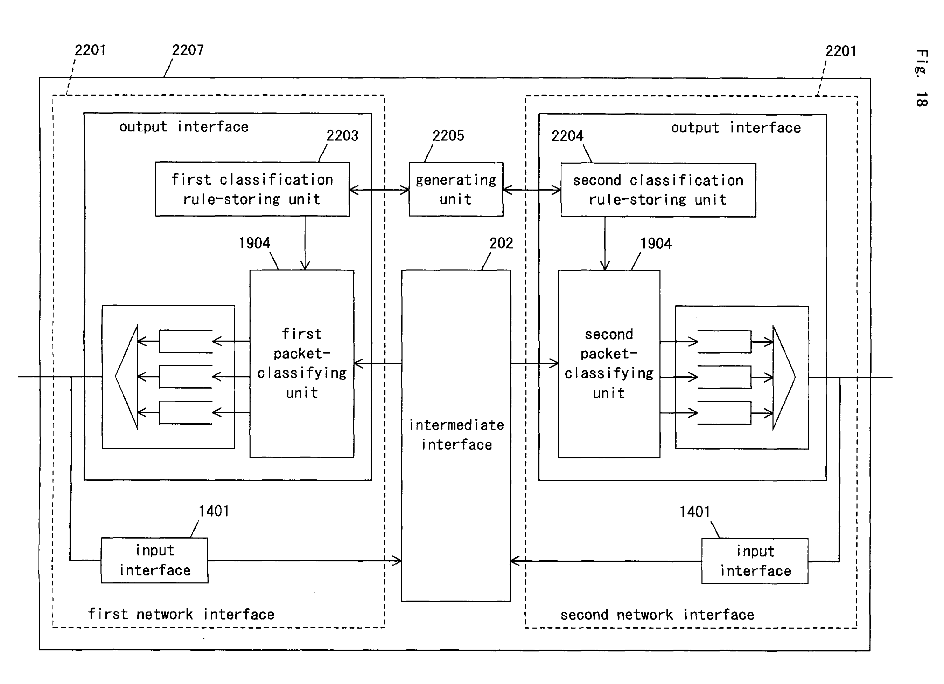

A seventh embodiment is now described with reference to Fig. 18 through Fig. 20.

Referring to Fig. 18, a communication apparatus according to the present embodiment is illustrated in block diagram form.

The communication apparatus 2207 includes two different network interfaces 2201, 2202 to relay a chain of packets. The first network interface 2201 is operable to transmit and receive data packets. The second network interface 2202 is operable to transmit and receive acknowledgement packets.

A first classification rule-storing unit 2203 stores a data packet-classifying rule for classifying the data packets. A second classification rule-storing unit 2204 stores an acknowledgement packet-classifying rule for classifying the acknowledgement packets.

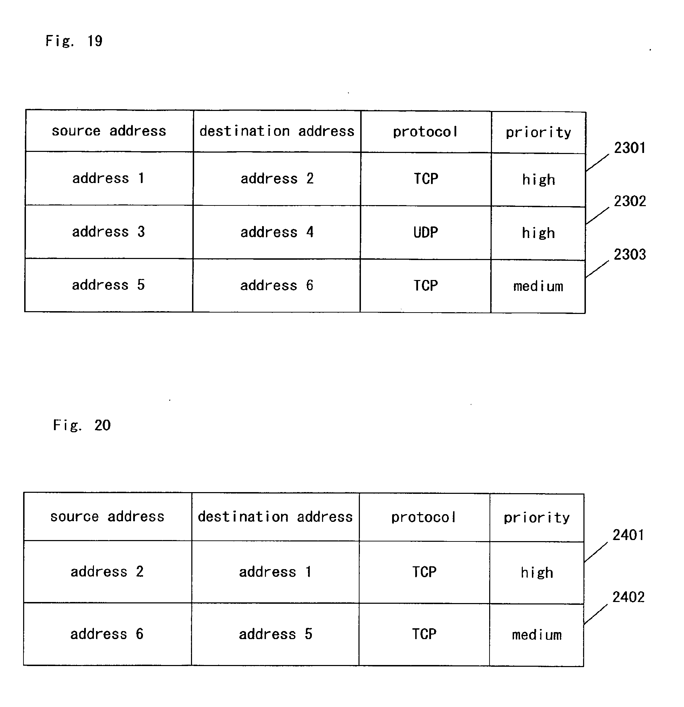

Referring to Fig. 19, the data packet-classifying rule according to the present embodiment is illustrated. Referring to Fig. 20, the acknowledgement packet-classifying rule according to the present embodiment is illustrated.

The first classification rule-storing unit 2203 stores the data packet-classifying rule based on information that is concerned with a source address, a destination address, and priority. For example, as illustrated in Fig. 19, information on a source address, a destination address, a protocol, and corresponding priority is contained in the first classification rule-storing unit 2203. Pursuant to the present embodiment, a packet according to the protocol TCP, and having a source address identified by "address 1" and a destination address identified by "address 2" is classified as having "higher" priority, and is directly stored in the first classification rule-storing unit 2203. Similarly, a data packet according to the protocol UDP, and having a source address identified by "address 3" and a destination address identified by "address 4" is classified as having "higher" priority.

A generating unit 2205 is operable to generate the acknowledgement packet-classifying rule based on the data packet-classifying rule stored in the first classification rule-storing unit 2201, and to feed the generated acknowledgment packet-classifying rule into the second classification rule-storing unit 2204. The second classification rule-storing unit 2204 stores the generated acknowledgment packet-classifying rule.

The acknowledgment packet-classifying rule as illustrated in Fig. 20 is stored in the second classification rule-storing unit 2204.

The acknowledgment packet-classifying rule of Fig. 20 is prepared based on the data packet-classifying rule of Fig. 19. More specifically, the UDP-related field of the data packet-classifying rule of Fig. 19 is eliminated from the acknowledgment packet-classifying rule of Fig. 20 because the acknowledgement packets are in no need thereof, and the TCP-related field is a target to the acknowledgement packet-classifying rule. Different from the data packet-classifying rule of Fig. 19, the source address field and the destination address field are exchanged with one another because the acknowledgement packets are transmitted in a direction opposite to that in which the data packets are transmitted.

Thus, the acknowledgment packet-classifying rule Fig. 20 is prepared.

As described above, pursuant to the present embodiment, the rule for classifying the acknowledgement packets responsive to the data packets is automatically prepared based on the pre-established data packet-classifying rule.

The classifying rule may be drawn up based on ports other than the addresses.

The first and second classification rule-storing units 2203, 2204 may be provided either separately or unitarily.

Although the present embodiment discusses the communication apparatus including the two different network interfaces, an alternative communication apparatus including three or greater network interfaces may be provided.

The base stations, communication apparatuses, and communication systems according to the first to seventh embodiments are ideally applicable to wireless LAN-related apparatuses that support IEEE802.11e-functions, and further to, e.g., a PLC (Power Line Communication) other than the wireless LAN.

The present invention provides a packet communication system operable to reserve the resources for the data packets and those for the acknowledgement packets, thereby transmitting the acknowledgement packets without delay, with a consequential improvement in communication throughput.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A base station (101) comprising:
a resource request-receiving unit (205) operable to receive a resource request from a communication apparatus (102); and
a resource-reserving unit (206) operable to make a resource reservation in response to the resource request, the resource reservation being required by communication between said base station (101) and the communication apparatus (102),
wherein said resource-reserving unit (206) reserves a resource required by a data packet and a resource required by an acknowledgment packet, the acknowledgment packet being paired with the data packet.

2. A base station (101) as defined in claim 1, wherein said resource-reserving unit (206) reserves a band required by the data packet and a band required by the acknowledgment packet.

3. A base station (101) as defined in claim 1, wherein said resource-reserving unit (206) notifies the communication apparatus (102) of a result from the resource reservation.

4. A communication apparatus (102) comprising:
a resource-requesting unit (303) operable to address a resource request to a base station (101), the resource request being a request to be made for a resource,
wherein the resource request addressed by said resource-requesting unit (303) includes a resource request required to communicate a data packet, and a resource request required to communicate an acknowledgement packet paired with the data packet, the resource request required to communicate the data packet being separate from the resource request required to communicate the acknowledgement packet.

5. A communication apparatus (102) as defined in claim 4, wherein said resource-requesting unit (303) addresses the resource request required to communicate the acknowledgment packet, when receiving a notification from the base station (101) as to assured resource reservation in response to the resource request required to communicate the data packet.

6. A communication system comprising:
a first communication apparatus (803);
a second communication apparatus (802) operable to feed an acknowledgment packet into said first communication apparatus (803) upon receipt of a data packet from said first communication apparatus (803), the acknowledgment packet being paired with the data packet; and
a base station (801) operable to administer a resource for communication between said first communication apparatus (803) and said second communication apparatus (802);
wherein said first communication apparatus (803) comprises a resource-requesting unit (303) operable to address a resource request to said base station (801), the resource request being required to communicate the data packet;
wherein said second communication apparatus (802) comprises a resource-requesting unit (303) operable to address a resource request to said base station (801), the resource request being required to communicate the acknowledgement packet;
wherein said base station (801) comprises a resource request-receiving unit (205) operable to receive the resource request from said first communication apparatus (803) and the resource request from said second communication apparatus (802), and a resource-reserving unit (206) operable to reserve a resource required by the data packet and a resource required by the acknowledgment packet.

7. A communication system as defined in claim 6, wherein said first communication apparatus (803) comprises an output instruction unit (1102) operable to issue an instruction signal to said second communication apparatus (802) to urge said second communication apparatus (802) to address, to said base station (801), the resource request required to communicate the acknowledgement packet.

8. A communication system as defined in claim 7, wherein said first communication apparatus (803) is connected to a third communication apparatus (1301) to transfer the data packet from said third communication apparatus (1301) to said second communication apparatus (802) through said first communication apparatus (803),
wherein said first communication apparatus (803) comprises a determining unit (1404) operable to determine whether a resource request must be addressed to said base station (801) for the data packet transferred from said third communication apparatus (1301), before said first communication apparatus (803) transfers the data packet to said second communication apparatus (802),
wherein, in response to a result from determination from said determining unit (1404), said first communication apparatus (803) addresses, to said base station (801), the resource request required to communicate the data packet, and said second communication apparatus (802) addresses, to said base station (801), the resource request required to communicate the acknowledgement packet.

9. A communication apparatus (1803) comprising:
a receiving unit (1908) operable to receive a data packet;
a determining unit (1901) operable to determine priority for the data packet received by said receiving unit (1908);
a storing unit (1906) operable to store an acknowledgement packet in accordance with the priority determined by said determining unit (1901), the acknowledgment packet being paired with the data packet; and
an output unit (1907) operable to output the acknowledgment packet in accordance with the priority from said communication apparatus (1803) through said storing unit (1906).

10. A communication apparatus (1803) as defined in claim 9, wherein said determining unit (1901) determines the data packet as having increased priority when the data packet is at least one of an image packet and an audio packet.

11. A communication apparatus (2207) comprising:
a first classification rule-storing unit (2203) operable to store a data packet-classifying rule for classifying a data packet;
a second classification rule-storing unit (2204) operable to store an acknowledgement packet-classifying rule for classifying an acknowledgment packet, the acknowledgment packet being paired with the data packet; and
a generating unit (2205) operable to generate the acknowledgement packet-classifying rule based on the data packet-classifying rule.

12. A communication apparatus (2207) as defined in claim 11, wherein each of the data packet-classifying rule and the acknowledgement packet-classifying rule includes at least one of a source address of the data packet, a destination address of the data packet, a communication protocol of the data packet, and priority of the data packet.

13. A communication apparatus (2207) as defined in claim 12, wherein said generating unit (2205) applies the priority in the data packet-classifying rule to the acknowledgement packet-classifying rule.

14. A communication apparatus (2001) comprising:
a receiving unit (1908) operable to receive a data packet;
a priority-detecting unit (2101) operable to detect priority from the data packet; and
a priority-assigning unit (2103) operable to assign the priority detected by said priority-detecting unit (2101) to an acknowledgement packet, the acknowledgment packet being paired with the data packet.

15. A communication apparatus (2001) as defined in claim 14, wherein the priority detected by said priority-detecting unit (2101) is at least one of 802.1 p-priority possessed by a MAC header, a ToS-field possessed by an IPv4 packet, a DSCP-field possessed by the IPv4 packet, a traffic class field possessed by an IPv6 packet, and a flow label field possessed by the IPv6 packet.
